# EUROPÄISCHE PATENTSCHRIFT

(11) **EP 0 707 404 B1**
(45) Veröffentlichungstag und Bekanntmachung des Hinweises auf die Patenterteilung: **02.04.2003**
(21) Anmeldenummer: 95114652.1
(22) Anmeldetag: 18.09.1995
(51) Int. Cl.: H04M 3/54, H04M 3/46

(54) **Verfahren zur Anrufübernahme in einem Kommunikationssystem**
Method for a pick-up facility in a communication system
Procédé pour la réception des appels dans un système de communication

(30) Priorität: 30.09.1994 DE 4435203
(43) Veröffentlichungstag der Anmeldung: 17.04.1996
(73) Patentinhaber: SIEMENS AKTIENGESELLSCHAFT, 80333 München (DE)
(72) Erfinder: Dziennus, Norbert, Dipl.-Ing., D-44227 Dortmund (DE); Roth, Roland, Dipl.-Inform., D-45884 Gelsenkirchen (DE); Böttger, Detlev, Dipl.-Ing., D-58239 Schwerte (DE); Adelpoller, Ernst, A-1232 Wien (AT); Lindemann, Werner, Dr. Ing., D-45473 Mülheim/Ruhr (DE)

(56) Entgegenhaltungen:
- EP-A- 0 350 836
- GB-A- 2 273 025

## Beschreibung

Die Erfindung betrifft ein Verfahren zur Übernahme eines für ein Kommunikationsendgerät eines Kommunikationssystems bestimmten Anrufes durch ein anderes Kommunikationsendgerät, das neben den Wählzifferntasten zumindest noch Funktionstasten aufweist, durch deren Betätigung jeweils eine Programmsteuerung für die Realisierung von leistungsmerkmalspezifischen Steuerprozeduren aufrufbar und Verbindungsaufbauprozeduren einleitbar sind, wobei die, diese Prozeduren einleitenden und steuernden Informationen sowie die Tastenidentifikationsinformationen in den einer Taste jeweils zugeordneten Speicherbereich der Datenbasis als vermittlungsprozedur- und leistungsmerkmalprozedurrelevante Steuerdaten, auf die die zentrale Systemsteuerung zugreift, enthalten sind und wobei das Kommunikationsendgerät eine Anzeigeeinrichtung aufweist, auf der u.a. zustands- und leistungsmerkmalsbezogene Anzeigen durch die Systemsteuerung darstellbar sind.

Neben dem Verbindungsauf- und -abbau zwischen einem Kommunikationsendgerät und dem Kommunikationssystem werden auch bestimmte Prozedurabläufe, wie sie beispielsweise die Inanspruchnahme von Teilnehmerleistungsmerkmalen bedingen, mit Hilfe einer bestimmten Signalisierungsprozedur gesteuert. Zeitgemäße Kommunikationsendgeräte in digital gesteuerten Kommunikationssystemen, insbesondere in privaten Kommunikationssystemen weisen neben einer Wähltastatur weitere Sondertasten auf. Diesen können beispielsweise als programmierbare Funktionstasten spezielle Funktionen zugeordnet werden. Sie dienen beispielsweise zur Inanspruchnahme von Leistungsmerkmalen, die in privaten Kommunikationssystemen mit zunehmender Tendenz in einer Vielzahl bereitgestellt werden. Um den zur Abdeckung des gesamten Funktionsbereiches notwendigen Tastenvorrat zu reduzieren, können Leistungsmerkmale auch durch vorgegebene, vom Benutzer vorzunehmende Kennzahlprozeduren aktiviert werden. Gegebenenfalls zusätzlich zu der Möglichkeit, Leistungsmerkmale über jeweils eine Funktionstaste zu programmieren oder über eine Kennzahl zu aktivieren ist es bekannt, Leistungsmerkmale dem Benutzer z.B. in einem Auswahlmenü anzubieten. Es ist in einem solchen Falle möglich, ein angezeigtes Leistungsmerkmal durch eine einfache Handhabung, beispielsweise durch eine Tastenbetätigung zu aktivieren. Bei der Darstellung der Menüleiste auf der am Endgerät, z.B. in Form eines alphanumerischen Displaysvorhandenen Anzeigeeinrichtung, können dann zur Auswahl der Menüoptionen wenige Tasten verwendet werden. Eine derartige Anzeigeeinrichtung wird in zeitgemäßen Kommunikationssystemen und Kommunikationsendgeräten zur Visualisierung weiterer Prozedursteuerinformationen benutzt. Diese können aus der Anzeigeeinrichtung durch eine entsprechende Umsetzung in teilnehmerverständliche Textinformationen angezeigt werden.

In programmgesteuerten privaten Kommunikationssystemen sind, wie bereits erwähnt, eine Reihe unterschiedlichster Leistungsmerkmale bekannt, die einerseits den Bedienerkomfort steigern und andererseits über die Grundfunktionen der Vermittlung hinausgehende Verbindungsmöglichkeiten bieten. Ein Beispiel für ein solches Leistungsmerkmal ist die sog. Anrufübernahme. Hierzu kann eine Person, die registriert, daß ein bestimmtes Endgerät gerufen wird, durch Einleiten des Dienstes der "Anrufübernahme" an seinem eigenen oder einem beliebigen anderen Endgerät den Anruf übernehmen. Das Einleiten dieses Dienstes kann durch eine bestimmte Kennwahlprozedur oder auch nur durch die Betätigung einer hierfür vorgesehenen Funktionstaste erfolgen. Anschließend ist es erforderlich, daß die Rufnummer des ursprünglich gerufenen Endgerätes eingewählt wird, um zusammen mit der Dienstekennzeichnung die Systemsteuerung zu veranlassen, die ursprünglich für das andere Endgerät bestimmte Gesprächsverbindung an dieses übernahmebereite Endgerät durchzuschalten. Dies setzt also voraus, daß die Rufnummer des ursprünglich gerufenen Endgerätes dem übernehmenden Teilnehmer bekannt ist. In aller Regel setzt dies dann auch weiterhin voraus, daß sich das ursprünglich gerufene Endgerät im gleichen Raum befindet. Um das möglicherweise bestehende Problem der notwendigen Kenntnis der Rufnummer des anderen Endgerätes zu umgehen, können den Endgeräten auch Beistellkonsolen zugeordnet sein, die sog. Teilnehmertasten aufweisen. Bei ihrer jeweiligen Betätigung erfolgt die Abgabe der betreffenden Rufnummerninformation. Auch in diesem Fall ist es notwendig, daß das ursprünglich gerufene Endgerät bekannt ist. Um dies sicherzustellen, ist es auch möglich, Anrufübernahmegruppen zu bilden, mit der Maßgabe, daß nur Anrufe innerhalb dieser jeweiligen Gruppe angenommen werden können. Eine derartige Konstellation führt dann aber dazu, daß ggf. andere Anrufe nicht abgefragt werden.

Es ist die Aufgabe der Erfindung, im Zusammenhang mit dem bereitgestellten Leistungsmerkmal "Anrufübernahme" die Inanspruchnahmemöglichkeiten zu optimieren.

Dies wird ausgehend vom Oberbegriff des Patentanspruches 1 durch dessen kennzeichnende Merkmale gelöst. Das wesentliche der Erfindung besteht darin, daß einem Teilnehmer auf der Anzeigeeinrichtung seines Endgerätes diejenigen anderen Endgeräte angezeigt werden, für die ein Rufzustand besteht. Je nach Anzeigezeilen der Anzeigeeinrichtung sind diese bei mehreren gleichzeitig bestehenden Anrufen einzeln nacheinander oder zumindest teilweise gleichzeitig anzeigbar. In eine derartige Anzeige kann sowohl das gerufene als auch das rufende Endgerät einbezogen sein. Grundsätzlich kann eine derartige Anzeige der aktuell gerufenen Teilnehmer entweder voll automatisch durch das System erfolgen, oder eine derartige Anzeige kann durch einen Teilnehmer aufgrund eines in einem solchen Fall an seinem eigenen oder durch die akustische Signalisierung an dem angeforderten Endgerät erzeugten Aufmerksamkeitszeichens angefordert werden. Bezüglich der anzuzeigenden gerufenen Teilnehmer bzw. Endgeräte können bestimmte Festlegungen, die beispielsweise durch Priorisierungslisten vorab eingespeichert sind getroffen werden. Es können bei einer derartigen Festlegung bestimmte Dringlichkeiten bezüglich der zu übernehmenden Anrufe festgelegt werden. Bei einer solchen erfindungsgemäßen Anzeige können räumliche Zuordnungen außer Betracht bleiben. Die ggf. in einer Anrufübernahmegruppe zusammengefaßten Teilnehmer sind frei zusammenzustellen. Je nach Ausgestaltung der Bedienungsoberfläche hat ein Teilnehmer die Möglichkeit unmittelbar eine Verbindung zu dem angezeigten Endgerät oder zu dem bei einer Anzeige von mehreren zeitgleich gerufenen Endgeräten von ihm ausgewählten Endgerät herzustellen. Unter der Voraussetzung einer Bedienungsoberfläche, bei der mit Hilfe einer Bestätigungstaste die Ausführung einer angezeigten Option veranlaßbar und mit Hilfe einer Folgetaste die nächste Option auf der Anzeigeeinrichtung angezeigt wird, ist eine gezielte Auswahl eines zu übernehmenden Anrufes in einfacher Weise möglich. Mit Hilfe der Betätigung der Bestätigungstaste wird dann durch die damit übermittelte Information die Systemsteuerung veranlaßt unmittelbar die Verbindung zu dem aktuell angezeigten gerufenen Endgerät herzustellen. Dies erfolgt ohne zusätzliche besondere Manipulationen und ohne Rufzustand für das die Rufübernahme beabsichtigende Endgerät durch die üblichen Rufannahmeprozeduren. Bei dieser erfindungsgemäßen Prozedur einer Anrufübernahme ist es also nicht erforderlich, die Rufnummer des zu übernehmenden Endgerätes einzuwählen.

Um die Auswahlkriterien bei mehreren bestehenden Anrufen zu vereinfachen und um den zeitlichen Aufwand für eine derartige Auswahl zu reduzieren kann erfindungsgemäß eine Liste für die Priorisierung der Anrufe eingespeichert sein. Es kann beispielsweise durch ein entsprechend ausgestaltetes Priorisierungsprogramm festgelegt werden, daß bei mehreren Anfrufen das jeweils am längsten gerufene Endgerät als nächster abzufragender Anruf auf der Anzeigeeinrichtung angeboten wird.

Weitere vorteilhafte Ausgestaltungen sind den restlichen Unteransprüchen zu entnehmen.

Die Erfindung wird im folgenden anhand eines figürlich dargestellten Ausführungsbeispiels erläutert. In der FIG ist die Struktur eines digitalen Kommunikationssystems schematisch dargestellt. Es sind lediglich die zum Verständnis der Erfindung notwendigen Komponenten gezeigt.

Zentraler Bestandteil des Kommunikationssystems KS, das ein Nebenstellen-Kommunikationssystem darstellt, ist ein zentrales Koppelfeld KF, über das Endgeräte - von denen die Fernsprechendgeräte FE und FEx schematisch angedeutet sind - miteinander bzw. mit zu einer öffentlichen Vermittlungsanlage ÖN führenden Leitungen AL verbindbar sind. Das zentrale Koppelfeld KF steht unter dem Steuereinfluß einer zentralen Systemsteuerung AST, die neben dem zentralen Prozessor CPU eine Speichereinrichtung SPE und eine Takteinheit TG enthält. Der zentrale Prozessor CPU steuert sämtliche Vermittlungsvorgänge und besorgt eine Aufbereitung und Zuteilung der Steuerdaten. Diese Aufgaben können grundsätzlich auch auf mehrere Prozessoren verteilt werden.

In dem Kommunikationssystem KS sind Leitungsanschlußeinrichtungen, symbolisiert durch die Leitungsanschlußeinrichtung LT angeordnet. Diese enthalten jeweils Teilnehmeranschlußmodule SLM. Diese Module sind über Teilnehmeranschlußleitungen ASL jeweils mit einem der Kommunikationsendgeräte FE bis FEx verbunden, wobei prinzipiell zwei unterschiedliche Teilnehmeranschlußmodule SLM vorgesehen sind. Dies sind zum einen Teilnehmeranschlußmodule für den Anschluß analoger Kommunikationsendgeräte und zum anderen Teilnehmeranschlußmodule für den Anschluß digitaler Kommunikationsendgeräte. Ein solches digitales Teilnehmeranschlußmodul ist für den Anschluß einer ganz bestimmten Anzahl von digitalen Kommunikationsendgeräten vorgesehen. Die Nachrichtenübertragung erfolgt hierbei z.B. über Nachrichtenkanäle N und die Signalisierung wird über einen zusätzlichen Kanal S übermittelt. Die vom Kommunikationsendgerät z.B. dem Endgerät FE übermittelten digitalen Sprachinformationen werden ebenfalls über eine Multiplex-Einrichtung MUX zum Koppelfeld KF weitergeleitet. Vermittlungstechnisch gesteuert werden die Leitungsanschlußeinrichtungen LT von der Anlagensteuerung AST. Hierbei ist jede Leitungsanschlußeinrichtung über einen Signalisierungskanal SK mit der Anlagensteuerung verbunden. Über diesen Signalisierungskanal SK werden die Informationen mit Hilfe der bekannten HDLC-Übermittlungsprozedur ausgetauscht. Die in der zentralen Systemsteuerung gebildeten Taktsignale werden über eine Taktleitung TL an die Leitungsanschlußeinrichtungen LT verteilt. Das Zurverfügungstellen der Taktsignale wird durch die Einheit TG symbolisiert.

Der Zugriff zu einer Amtsleitung AL über die, - ggf. als eine von mehreren - das Kommunikationssystem KS beispielsweise mit dem öffentlichen Netz ÖN verbunden ist, erfolgt über die Schnittstelle LS. Diese Schnittstelle beinhaltet beispielsweise einen ISDN-Teil, der z.B. als standardisierte SO-Schnittstelle ausgebildet sein kann. Die Peripherie der Kommunikationsanlage wird ergänzt durch eine Signalisierungseinheit SE, die zur Zeichenversorgung des Kommunikationssystems KS vorhanden ist.

Der zentrale Prozessor CPU der zentralen Systemsteuerung AST hat Zugriff zu den in der Speichereinrichtung SPE abgelegten Daten. Sie besteht grundsätzlich aus den Speicherteilen PROM und RAM. In dem Programmspeicherteil PROM ist das Anlagenbetriebsprogramm und die zu ihm bezüglich der Peripherietechnik, der Betriebstechnik, der Sicherheitstechnik und der Vermittlungstechnik gehörenden Programme abgespeichert. Dies ist bezüglich der Vermittlungstechnik durch das Modul VT angedeutet. Mit LM ist ein Modul bezeichnet, daß symbolisch für die zur Realisierung der einzelnen Leistungsmerkmale vorhandenen Programmodule steht. Für die bezüglich der erfindungsgemäßen Anrufübernahme implementierten Programmabläufe soll das Modul AÜ maßgebend sein. Durch die Programmkomponente BOF wird die sog. Benutzungsoberfläche gesteuert. Dieses Programmodul beinhaltet unterschiedliche Prozeduren. Der Speicherteil RAM dient u.a. der Aufnahme von temporären Daten zur Programmablaufsteuerung. Es werden in ihm auch Daten übernommen, die während eines durch ein Kommunikationsendgerät FE initiierten Verbindungsaufbaus oder bei der Inanspruchnahme eines Dienstes bzw. eines Leistungsmerkmals abgefragt werden. Im Speicherteil RAM ist als Teileinheit der Datenbasis der Speicherbereich KD angedeutet. In diesem sind die Kundendaten, wie z.B. die den einzelnen Endgeräten FE zugeteilten Berechtigungen und die Anlagenkonfiguration abgelegt.

Jedem Endgerät ist ein Speicherbereich FE-D zugeteilt, in dem sämtliche endgerätebezogenen Daten abgelegt sind. Es ist also daraus der aktuelle vermittlungstechnische Zustand, beispielsweise ob der betreffende Teilnehmer den Handapparat abgehoben hat oder ob er gerade gerufen wird usw. als Speicherinformation entnehmbar. In diesem als dynamische Datenbasis für die einzelnen Endgeräte jeweils anzusehenden Speicherbereich werden auch Informationen bezüglich der beanspruchten Leistungsmerkmale abgespeichert. In dem Teilbereich SYS des RAM-Speichers sollen systembezogene Daten enthalten sein. So werden beispielsweise in einer Liste RL die aktuell gerufenen Endgeräte des Kommunikationssystems KS eingespeichert. An diesen Informationen über die gerufenen Endgeräte können Informationen über die jeweils rufenden Endgeräte zugeordnet sein. Die Information über die Indentität eines rufenden externen Fernsprechendgerätes EF wird beispielsweise im sog. ISDN-Netz übermittelt.

Ein Fernsprechendgerät FE weist u.a. für die Anzeige von Wahlinformationen, Uhrzeitinformationen von Texten und von Prozedursteuerinformationen eine Anzeigeeinrichtung DL auf. Diese ist beispielsweise durch ein LCD-Display realisiert. Für die Eingabe von numerischen Informationen, z.B. von Wahlinformationen ist ein Tastenfeld Ta vorgesehen. Neben dem nicht im einzelnen dargestellten numerischen Tasten weist dieses Tastenfeld Ta noch zusätzliche Funktionstasten symbolisiert durch die Taste TA auf. Mit einer derartigen Funktionstaste kann beispielsweise die Inanspruchnahme des Leistungsmerkmals "Anrufübernahme" erfolgen. Gegebenenfalls zusätzlich zu der Möglichkeit, die Leistungsmerkmale über jeweils eine Funktionstaste zu programmieren oder über eine Kennzahl zu aktivieren, ist es möglich, Leistungsmerkmale dem Benutzer z.B. auf dem Display in einem Auswahlmenü anzubieten. Die jeweils aktuell angebotene Option kann dann durch eine einfache Handhabung beispielsweise eine Tastenbetätigung in Anspruch genommen werden. Hierzu werden beispielsweise eine Folgetaste FT und eine Bestätigungstaste BT benutzt. Die einzelnen Optionen werden durch die Komponente "Benutzungsoberfläche" BOF für die Darstellung auf dem Display DL aufbereitet. Die Prozedurführung in der Komponente BOF bildet eine Information für das Display, die dann - veranlaßt durch die zentrale Systemsteuerung - über den Signalisierungskanal S der Anschlußleitung ASL an das betreffende Endgerät übermittelt wird. Die von der Folgetaste FT und der Bestätigungstaste BT gelieferten Informationen werden beispielsweise in dem nicht weiter dargestellten Bedienfeld - Mikroprozessorsystem erkannt und zur Systemsteuerung übertragen. Von dieser werden sie dem Menühändler MH übermittelt. Dies ist durch die Pfeile FTI und BTI angedeutet. Die anderen Tastenanreize von der Peripherie werden über den Tasteninterpreter TI als prozedursteuerorientierte funktionale Anreize der Prozedurverwaltung PV als Teil der Komponente BOF zugeleitet. Innerhalb des für die Prozedurverwaltung zuständigen Moduls PV werden durch Teilmodule PSt1...PStn die Prozeduren zur Aktivierung bestimmter Leistungsmerkmale aufgerufen. Der Menühändler MH übernimmt die Darstellung der einzelnen Optionen auf dem Display DL der Endgeräte und die Interpretation der Folgetaste FT zur Anzeige der nächsten Option. Er führt weiterhin die Umwertung einer betätigten Bestätigungstaste BT in Prozedursteuerinformationen abhängig von der angezeigten Option aus. Aus der zentralen Komponente PV werden Anreize zur Verbindungssteuerung an die vermittlungstechnische Komponente VT übermittelt. Von dieser vermittlungstechnischen Komponente werden Anreize an die zentrale Komponente PV gegeben, die dieser die Änderungen der vermittlungstechnischen Zustände mitteilen.

Eines der Programmodule PSt, beispielsweise das Programmodul PSt1 ist als Leistungsmerkmal-Programmodul zur Durchführung von Anrufübernahmeprozeduren vorgesehen. Jeder im System bestehende Anruf bzw. zumindest die von einem externen Endgerät FE ausgehenden Anrufe sind auf dem Display der einzelnen Endgeräte FE anzeigbar. Gerufene Endgeräte und ggf. das den einzelnen Rufen zuzuordnende rufende Endgerät werden in dem Speicherbereich RL in Form einer Liste eingespeichert. Es könnte nun generell vorgesehen sein, daß die gerufenen Endgeräte, deren Ruf nicht angenommen wird auf dem Display DL der anderen Endgeräte automatisch angezeigt werden. Bei mehreren gleichzeitig gerufenen Endgeräten müßte dann eine entsprechende Zeilenzahl auf dem Display zur Verfügung stehen. Eine andere Möglichkeit besteht darin, zunächst im Falle eines oder mehrerer nicht angenommener Anrufe einen Aufmerksamkeitston für die einzelnen Endgeräte zu erzeugen. Der einzelne Teilnehmer kann sich dann entschließen, ob er eine entsprechende Statusabfrage über diese nicht angenommenen Rufe vornehmen will. Eine derartige Statusabfrage könnte er beispielsweise durch einen entsprechenden Tastenanreiz bei Betätigung der Funktionstaste TA aktivieren. Es können im System programmtechnisch implementiert sein, daß nicht angenommene Anrufe an vorgegebenen Endgeräten nicht an allen sondern nur an ausgewählten anderen Endgeräten, die beispielsweise gruppenweise zusammengefaßt sind, angezeigt werden.

Nachdem ein Teinehmer seine Bereitschaft zu einer Anrufübernahme signalisiert hat, werden ihm im Rahmen der gewünschten Statusabfrage über solche anstehende oder nicht angenommene Rufe diese Rufe im einzelnen angezeigt. Sollte bei mehreren gleichzeitig vorhandenen Anrufen die auf dem Display dafür zur Verfügung stehende Zeilenzahl nicht für eine gesamte Anzeige ausreichen, so kann der Teilnehmer durch die Betätigung der Taste FT sich im Sinne eines "Blätterns" die übrigen angerufenen Endgeräte ggf. in Verbindung mit den rufenden Endgeräten anzeigen lassen. Erfolgt die Anzeige von mehreren derartigen Anrufen, so wird während dieses "Blätterns" der jeweils angezeigte aktuelle Anruf entsprechend markiert. Zur Übernahme des durch den Teilnehmer ausgewählten anstehenden Anrufes ist es bei der zugrundegelegten Benutzungsoberfläche lediglich erforderlich, die Bestätigungstaste BT zu betätigen. Da das jeweilige Kommunikationsendgerät FE über die Teilnehmeranschlußleitung ASL mit dem Kommunikationssystem KS kommuniziert wird über den Signalisierungskanal S diese Tastenbetätigungsinformation dem System zugeführt. Diese Information veranlaßt die Systemsteuerung unmittelbar, die Verbindung zwischen dem rufenden Endgerät und demjenigen Endgerät herzustellen, das die Anrufübernahmebereitschaft signalisiert hat. Dies erfolgt ohne zusätzliche vermittlungstechnische Prozedur. Der Anruf wird diesem Endgerät durch eine entsprechende Umkopplung vermittelt und der Rufzustand für das ursprünglich gerufene Endgerät beendet. Es ist also in einfacher Weise eine gezielte Auswahl der Anrufübernahme durch diese Displayanzeige in Verbindung mit der Menüführung möglich. Das rufende Endgerät wird unmittelbar mit dem übernehmenden Endgerät verbunden. Hierzu ist dann lediglich die übliche Prozedur erforderlich, d.h. es ist die Freisprecheinrichtung zu aktivieren oder der Handapparat abzunehmen.

Für den einzelnen Teilnehmer könnte vorab entweder in dem Speicherbereich FE-D oder im Speicherbereich KD eine Priorisierungsliste PL abgespeichert sein, in der festgelegt ist, in welcher Reihenfolge anstehende und vom ursprünglichen Zielendgerät nicht angenommene Anrufe übernommen werden sollen. Die einzelnen Anrufe werden dann entsprechend dieser Konfigurierungsliste für die Priorisierung der Anrufe angeboten. Damit sind bestimmte Wertigkeiten vorgegeben und die einzelnen Anrufe können entsprechend dieser damit festgelegten Reihenfolge in einer Warteschlange WS eingereiht werden. Es kann beispielweise festgelegt sein, daß diese Anrufe in der Reihenfolge ihres Eintreffens angeboten werden. Es können auch diese Zielendgeräte in verschiedenen Gruppen zusammengefaßt sein. Die Reihenfolge ist z.B. dann in der Weise festgelegt wird, daß zunächst die Anrufe in der ersten Gruppe und anschließend die Anrufe in den jeweils anderen Gruppen, denen eine niedrigere Dringlichkeit zugeordnet ist angeboten werden. Es kann auch festgelegt sein, daß beispielsweise zunächst Anrufe angezeigt werden, die als Zielendgerät in einer bestimmten Gruppe zusammengefaßt sind und daß anschließend die anstehenden Anrufe für Zielendgeräte außerhalb dieser festgelegten Gruppenbildung in einer gegebenenfalls auch vorgebbaren Reihenfolge angeboten werden. Es lassen sich also vorab in einer derartigen Liste die möglichen Anrufe für Zielendgeräte in einer "Dringlichkeitsliste" festlegen.

Für einzelne Teilnehmer kann bezüglich der Anrufübernahmemöglichkeit eine individuelle Prioritätenliste abgespeichert werden. In Abhängigkeit von dem Inhalt dieser Liste werden dann die Anrufe auf dem Display DL dargestellt. Dabei zu berücksichtigende mögliche Prioritäten sind die Länge der Rufzeit, Anrufe innerhalb einer Gruppe, - vorzugsweise der Gruppe, zu der dieser jeweilige übernahmebereite Teilnehmer gehört, - externe Anrufe und Anrufe für bestimmte Teilnehmer.

Auch in den Fällen, in denen für das eigene Endgerät ein Rufzustand besteht, und ein anderer bestehender Anruf zum Zwecke der Anrufübernahme auf dem Display des eigenen Endgerätes angezeigt wird, kann diese Anrufübernahme aktiviert werden. Aufgrund der Betätigung der Funktionstaste "Anrufübernahme" wird in einem solchen Fall durch die Systemsteuerung die Rückstellung des ursprünglichen Rufes bewirkt. Der ursprünglich bestehende Ruf könnte dann in der Weise behandelt werden, daß eine Rufweiterschaltung nach einer bestimmten Zeit an ein anderes Endgerät vorgenommen wird. Dies könnte beispielsweise im Sinne einer Rufweiterschaltung im Freifall erfolgen.

Im Zusammenhang mit dieser vereinfachten erfindungsgemäßen Prozedur der Anrufübernahme besteht auch die Möglichkeit, die übernommenen Anrufe nach Dringlichkeit in eine Warteposition zu bringen. Dies kann, nachdem sich der betreffende Teilnehmer vermittels der aktivierten Anrufübernahme, bei dem jeweils rufenden Teilnehmer gemeldet hat, auf verschiedene Weise erfolgen. Einmal besteht die Möglichkeit, ein Programm aufzurufen, das derart ausgestaltet ist, daß bei mehreren Anrufen das jeweils am längsten gerufene Endgerät als nächster abzufragender Anruf auf dem Display angeboten wird. Hierzu wird vom System die entsprechend kontinuierlich umsortierte Rufliste RL abgefragt und der höchstpriore Anruf auf dem Display angeboten. Es können auch jeweils bei der Abfrage der einzelnen Gespräche für diese bestimmte Prioritäten vergeben werden. Entsprechend dieser Prioritäten werden sie dann in eine Warteposition gebracht. Diese Wartepositionen können nach dringenden D1 und nach weniger dringenden Anrufen D2 unterteilt sein, falls eine Mehrzahl derartiger Anrufe vorliegen sollte. In diese Warteposition können die einzelnen abgefragten Gespräche beispielsweise durch eine entsprechend der gewünschten Positionsziffer erfolgende mehrmalige Betätigung einer hierfür ausgewiesenen Funktionstaste oder durch die Einwahl einer Positionsziffer gebracht werden. Die Systemsteuerung bewirkt dann die entsprechende Abspeicherung in dem Wartespeicherbereich WS. Die abgefragten Gespräche könnten auch durch die Betätigung von unterschiedlichen Prioritätstasten in eine Warteposition gebracht werden. Entsprechend der vorgesehenen Positionierung werden dann die einzelnen Gespräche automatisch unmittelbar nacheinander auf dem Display angeboten. Die Übernahme erfolgt dann jeweils in der bereits geschilderten Weise durch die Betätigung der Bestätigungstaste BT. Der übernahmewillige Teilnehmer wird dann unmittelbar durch die Systemsteuerung mit dem jeweils rufenden Teilnehmer verbunden.

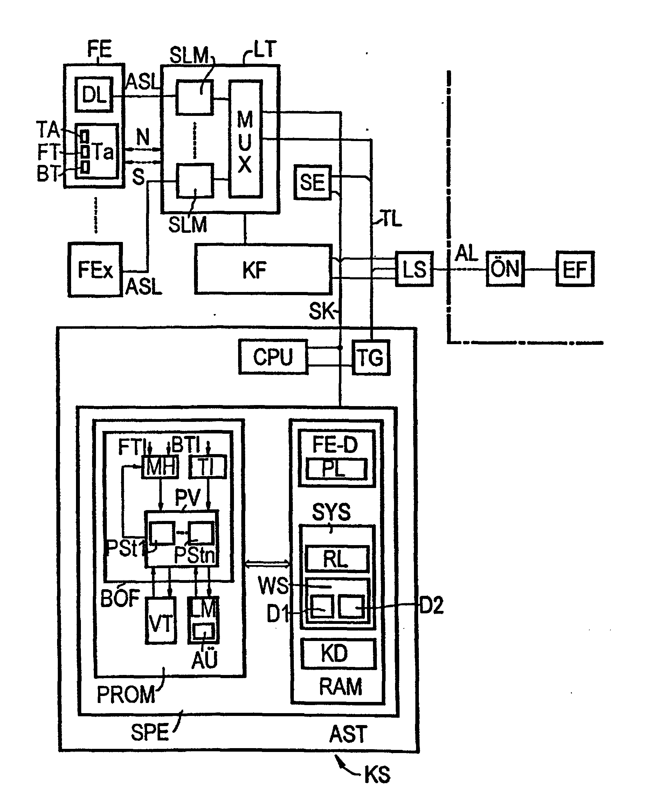

## Patentansprüche

1. Verfahren zur Übernahme eines für ein Kommunikationsendgerät (FEx) eines Kommunikationssystems (KS) bestimmten Anrufes durch ein zweites Kommunikationsendgerät (FE), das neben den Wählzifferntasten zumindest noch Funktionstasten (TA) aufweist, durch deren Betätigung jeweils eine Programmsteuerung für die Realisierung von leistungsmerkmalspezifischen Steuerprozeduren aufrufbar und Verbindungsaufbauprozeduren einleitbar sind, wobei die diese Prozeduren einleitenden und steuernden Informationen sowie die Tastenidentifikationsinformationen in dem einer Taste jeweils zugeordneten Speicherbereich einer Datenbasis als vermittlungsprozedur- und leistungsmerkmalsprozedurrelevante Steuerdaten auf die die zentrale Systemsteuerung zugreift enthalten sind, wobei das zweite Kommunikationsendgerät (FE) eine Anzeigeeinrichtung (DL) aufweist, auf der u.a. zustands- und leistungsmerkmalbezogene Anzeigen durch die Systemsteuerung darstellbar sind,
**dadurch gekennzeichnet,**
**daß** die in einem Speicherbereich (RL) eines Arbeitsspeicherbereiches (RAM) abgespeicherten aktuell gerufenen Kommunikationsendgeräte (FEx), gegebenenfalls in Abhängigkeit von der Eingabe einer bestimmten Information, an mindestens einem anderen Endgerät (FE) während der Zeitdauer des jeweiligen Rufzustandes nach dem Auslesen des Speicherbereichinhaltes durch die Systemsteuerung auf der Anzeigeeinrichtung (DL) dieses anderen Kommunikationsendgerätes (FE) als visuell erfaßbare Information zur Anzeige gebracht werden, daß durch eine von der Art der Bedienungsoberfläche abhängige weitere Informationseingabe an dem betreffenden Endgerät (FE) die Systemsteuerung veranlaßt wird, das gerufene Endgerät (FEx) bzw. das durch eine gezielte Auswahl des betreffenden Teilnehmers aus mehreren aktuellen Anrufen bestimmte gerufene Endgerät im Sinne einer Anrufübernahme diesem anderen übernahmebereiten Endgerät (FE) zu vermitteln.

2. Verfahren nach Anspruch 1,
**dadurch gekennzeichnet,**
**daß** das Vorhandensein mindestens eines am ursprünglichen Anrufziel nicht angenommenen Anrufes durch ein Aufmerksamkeitszeichen an den anderen Endgeräten oder durch die aktustische Signalisierung am ursprünglichen Anrufziel zur Kenntnis gebracht wird und daß eine an einem dieser übrigen Endgeräte erfolgende bestimmte Informationseingabe die Systemsteuerung veranlaßt, diese im Zusammenhang mit dem jeweiligen Rufzustand relevanten Informationen auf der Anzeigeeinrichtung (DL) des betreffenden Endgerätes (FE) darzustellen.

3. Verfahren nach Anspruch 2,
**dadurch gekennzeichnet,**
**daß** je nach Ausgestaltung der Anzeigeeinrichtung bei mindestens zwei oder mehreren gleichzeitig parallel gerufenen Endgeräten diese einzeln nacheinander oder zumindest teilweise gleichzeitig auf der Anzeigeeinrichtung aufgrund einer während ihres Rufzustandes jeweils abgeleiteten Identifizierungskennung anzeigbar sind.

4. Verfahren nach Anspruch 3,
**dadurch gekennzeichnet,**
**daß** die Anzeige auf der Anzeigeeinrichtung als eine die zeitgleich gerufenen Endgeräte und ggf. das jeweils rufende Endgerät kennzeichnende Text- und/oder Rufnummerndarstellung vorgenommen wird.

5. Verfahren nach Anspruch 3 oder 4,
**dadurch gekennzeichnet,**
**daß** bei mehreren sich zeitlich überschneidenden Anrufen die Anzeige auf der Anzeigeeinrichtung (DL) in der Reihenfolge des zeitlichen Eintreffens der Rufe vorgenommen wird.

6. Verfahren nach einem der vorhergehenden Ansprüche,
**dadurch gekennzeichnet,**
**daß** unter der Voraussetzung einer Menüoberfläche, bei der mit Hilfe einer Bestätigungstaste (BT) die Ausführung einer angezeigten Option veranlaßbar und mit Hilfe einer "Folge"-Taste (FT) die nächste Option auf der Anzeigeeinrichtung (DL) gezeigt wird, bei der von einem Kommunikationsendgerät (FE) angeforderten Anzeige der aktuell bestehenden Anrufe eine gezielte Auswahl und Aktivierung der Anrufübernahme mit Hilfe der diesbezüglich erfolgenden Betätigung der genannten Tasten vornehmbar ist.

7. Verfahren nach einem der vorhergehenden Ansprüche,
**dadurch gekennzeichnet,**
**daß** das aktuell angezeigte rufende externe oder interne Endgerat ohne weitere Manipulation und ohne Rufzustand für das die Rufübernahme beabsichtigende Endgerät (FE) durch die üblichen Rufannahmeprozeduren unmittelbar mit diesem die Rufübernahmebereitschaft signalisierenden Endgerät (FE) verbunden wird.

8. Verfahren nach Anspruch 1 oder 6,
**dadurch gekennzeichnet,**
**daß** teilnehmerindividuell Informationen, die bestimmte Zeitbedingungen und/oder die Art der Anrufe charakterisieren, in einer Prioritätsliste (PL) abspeicherbar sind und daß die zur Anrufübernahme anstehenden Anrufe in der darin abgelegten Wertigkeitsreihenfolge auf der Anzeigeeinrichtung (DL) darstellbar sind.

9. Verfahren nach Anspruch 8,
**dadurch gekennzeichnet,**
**daß** ein Priorisierungsprogramm derart ausgestaltet ist, daß bei mehreren zu übernehmenden Anrufen das jeweils am längsten gerufene Endgerät als nächster abzufragender Anruf auf der Anzeigeeinrichtung angeboten wird.

10. Verfahren nach Anspruch 8,
**dadurch gekennzeichnet,**
**daß** einzelne bestimmte gerufene Endgeräte oder gerufene Endgeräte, die einer ausgewählten Gruppe zugeordnet sind, nur einem bestimmten Endgerät oder einem Endgerät, das einer vorab festgelegten Endgerätegruppe zugehörig ist, angezeigt wird und von diesem jeweils übernehmbar ist.

11. Verfahren nach Anspruch 8,
**dadurch gekennzeichnet,**
**daß** ein Priorisierungsprogramm derart ausgestaltet ist, daß bei mehreren zu übernehmenden Anrufen die externen Anrufe zuerst angezeigt werden.

12. Verfahren nach einem der vorhergehenden Ansprüche,
**dadurch gekennzeichnet,**
**daß** durch den eine Rufannahme beabsichtigenden Teilnehmer bei mehreren, sich zeitlich überschneidenden angezeigten und von ihm zunächst angenommenen Anrufen durch eine bestimmte Prozedur die Reihenfolge in der Anzeige der jeweiligen Rufe im Sinne einer Warteposition beliebig bestimmbar ist.

13. Verfahren nach Anspruch 12,
**dadurch gekennzeichnet,**
**daß** die Reihenfolge durch die während der aktuellen Anzeige entsprechend der gewünschten Positionsziffer erfolgenden mehrmaligen Betätigung ein und derselben entsprechenden Funktionstaste festlegbar ist.

14. Verfahren nach Anspruch 12,
**dadurch gekennzeichnet,**
**daß** die Reihenfolge durch die während der aktuellen Anzeige erfolgende Einwahl einer Positionsziffer festlegbar ist, wodurch eine durch die Systemsteuerung bewirkte entsprechende Umspeicherung der abgespeicherten Rufzustände im Sinne einer entsprechenden Warteposition erfolgt.

15. Verfahren nach Anspruch 12,
**dadurch gekennzeichnet,**
**daß** die Reihenfolge durch die Betätigung unterschiedlicher, einer Positionsziffer zugeordneten Tasten erfolgt.

16. Verfahren nach einem der vorhergehenden Ansprüche,
**dadurch gekennzeichnet,**
**daß** die Anzeige der aktuell übernehmbaren Rufe nach Eingabe der diese Anzeige anfordernden Information auch außerhalb des vermittlungstechnischen Ruhezustandes des übernahmebereiten Endgerätes erfolgt.

17. Verfahren nach Anspruch 16,
**dadurch gekennzeichnet,**
**daß** mit der jeweiligen Anrufübernahme eines entsprechend ausgewählten anstehenden Rufes eine ursprünglich bestehende Gesprächsverbindung automatisch in den Haltezustand gelegt wird.

## Claims

1. Method for picking up a call, which is intended for a communications terminal (FEx) in a communications system (KS), by means of a second communications terminal (FE) which, in addition to the numerical dialling keys, also has at least function keys (TA) by whose operation a programme controller can be called for carrying out service-feature-specific control procedures and connection setting-up procedures can be initiated, with the information which initiates and controls these procedures as well as the key identification information being contained in the memory area, which is in each case associated with one key, of a database as control data which is relevant to switching procedures and service feature procedures, to which control data the central system controller has access, with the second communications terminal (FE) having a display device (DL) of which, inter alia, state-related indications and indications related to service features can be displayed by the system controller,
**characterized**
**in that** the communications terminals (FEx) which are currently being called and are stored in a memory area (RL) of a main memory area (RAM), possibly as a function of the inputting of specific information, are displayed on at least one other terminal (FE) as information which can be perceived visually on the display device (DL) of this other communications terminal (FE), throughout the time period of the respective call state after the memory area contents have been read by the system controller, in that a further information input, which is dependent on the nature of the operator interface, on the relevant terminal (FE) causes the system controller to switch the called terminal (FE), or the terminal which is being called and is defined by specific selection of the relevant subscriber from a number of current calls, in the sense of a call pickup to this other terminal (FE) which is ready to pick up calls.

2. Method according to Claim 1,
**characterized**
**in that** the presence of at least one call which has not been picked up at the original call destination is notified by means of an attention signal to the other terminals or by means of acoustic signalling at the original call destination, and in that a specific information input, which is made on one of these other terminals, causes the system controller to display this in conjunction with information which is relevant to the respective call state on the display device (DL) of the relevant terminal (FE).

3. Method according to Claim 2,
**characterized**
**in that**, depending on the configuration of the display device when there at least two or more terminals which are called in parallel at the same time, these can be displayed individually successively or at least partially simultaneously on the display device on the basis of an identification tag which is in each case derived during its call state.

4. Method according to Claim 3,
**characterized**
**in that** the display is produced on the display device as a text and/or call number display which identifies the terminals being called at the same time and, possibly, the respectively calling terminal.

5. Method according to Claim 3 or 4,
**characterized**
**in that**, when a number of calls occur which overlap in time, the display is produced on the display device (DL) in the time sequence in which the calls arrive.

6. Method according to one of the preceding claims,
**characterized**
**in that**, subject to the precondition of a menu interface in which the execution of a displayed option can be initiated by means of a confirmation key (BT) and the next option is displayed on the display device (DL) by means of a "next" key (FT), the display of the currently waiting calls, as requested by a communications terminal (FE), can be used to deliberately select and activate the call pickup by means of the operation of said keys being carried out for this purpose.

7. Method according to one of the preceding claims,
**characterized**
**in that** the currently displayed calling external or internal terminal is connected, without further manipulation and without a call state for the terminal (FE) which is intending to pick up the call, directly by means of the normal call acceptance procedures to this terminal (FE) which is signalling that it is ready to pick up the call.

8. Method according to Claim 1 or 6, **characterized in that** information which characterizes specific time conditions and/or the nature of the calls can be stored on a subscriber-specific basis in a priority list (PL), and **in that** the calls which are waiting for a call pickup can be displayed on the display device (DL) in the priority sequence stored in this priority list (PL).

9. Method according to Claim 8,
**characterized**
**in that** a prioritization programme is designed such that, when there are a number of calls to be picked up, the terminal which was in each case called the longest time ago is offered as the next call to be checked on the display device.

10. Method according to Claim 8,
**characterized**
**in that** individual specific called terminals or called terminals which are associated with a selected group is displayed only to a specific terminal or to a terminal which is associated with a terminal group defined in advance, and can in each case be picked up by this terminal.

11. Method according to Claim 8,
**characterized**
**in that** a prioritization programme is designed such that, when there are a number of calls to be picked up, the external calls are displayed first of all.

12. Method according to one of the preceding claims,
**characterized**
**in that** the subscriber who intends to receive a call when there are a number of calls which overlap in time, are displayed and will be picked up first by this subscriber, can use a specific procedure to define as required the sequence in the display of the respective calls, in the sense of a waiting position.

13. Method according to Claim 12,
**characterized**
**in that** the sequence can be defined by repeatedly operating one and the same appropriate function key in accordance with the desired item number during the current display.

14. Method according to Claim 12,
**characterized**
**in that** the sequence can be defined by selecting an item number during the current display, resulting in the system controller changing the locations of the stored call states, in the sense of an appropriate waiting position.

15. Method according to Claim 12,
**characterized**
**in that** the sequence is defined by operating different keys associated with one item number.

16. Method according to one of the preceding claims,
**characterized**
**in that** the calls which can currently be picked up are also displayed, after entering the information requesting this display, other than when the terminal which is ready to pick up calls is in the switching rest state.

17. Method according to Claim 16,
**characterized**
**in that** an originally existing call connection is automatically placed on hold whenever an appropriately selected waiting call is picked up.

## Revendications

1. Procédé pour la réception d'un appel déterminé pour un équipement terminal de communication (FEx) d'un système de communication (KS) grâce à un deuxième équipement terminal de communication (FE), qui présente outre les touches à chiffres de sélection au moins encore des touches de commande (TA) par l'actionnement desquelles à chaque fois une commande de programme pour la réalisation de procédures de commande spécifiques de facilité offerte aux usagers peut être appelée et des procédures d'établissement de communication peuvent être induites, les informations induisant et commandant ces procédures ainsi que les informations d'identification des touches étant contenues dans la zone de mémoire à chaque fois associée à une touche, une base de données comme données de commande convenant à la procédure de commutation et de facilité offerte aux usagers auxquelles accède la commande centrale du système, le deuxième équipement terminal de communication (FE) présentant un dispositif d'affichage (DL), sur lequel peuvent être représentés, entre autres, par la commande du système des affichages concernant l'état et la facilité offerte aux usagers, **caractérisé en ce que** les équipements terminaux de communication (FEx) appelés actuellement enregistrés dans une zone de mémoire (RL) d'une zone de mémoire de travail (RAM), le cas échéant en fonction de l'entrée d'une certaine information, sont portés à l'affichage en tant qu'information détectable visuellement sur au moins un autre équipement terminal (FE) pendant la durée de l'état d'appel respectif après la lecture du contenu de la zone de mémoire par la commande du système sur le dispositif d'affichage (DL) de cet autre équipement terminal de communication (FE), **en ce que** par une autre entrée d'information dépendante du type de la surface d'utilisation sur l'équipement terminal en question (FE), la commande du système est incitée à mettre en communication l'équipement terminal appelé (FE) resp. l'équipement terminal appelé déterminé à partir de plusieurs appels actuels par une sélection ciblée de l'abonné en question avec cet autre équipement terminal (FE) prêt à la réception au sens d'une réception d'appel.

2. Procédé selon la revendication 1, **caractérisé en ce que** la présence d'au moins un appel non accepté sur une cible d'appel d'origine peut être portée à la connaissance par un signal d'attention aux autres équipements terminaux ou par la signalisation acoustique sur la cible d'appel d'origine et **en ce qu'**une certaine entrée d'information se produisant sur l'un de ces autres équipements terminaux incite la commande du système à représenter ces informations importantes en liaison avec l'état d'appel respectif sur le dispositif d'affichage (DL) de l'équipement terminal en question (FE).

3. Procédé selon la revendication 2, **caractérisé en ce que** selon la configuration du dispositif d'affichage dans au moins deux ou plusieurs équipements terminaux appelés parallèlement et simultanément, ceux-ci sont affichables individuellement les uns après les autres ou au moins en partie simultanément sur le dispositif d'affichage en raison d'une caractéristique d'identification dérivée à chaque fois pendant son état d'appel.

4. Procédé selon la revendication 3, **caractérisé en ce que** l'affichage sur le dispositif d'affichage est réalisé sous forme de représentation de texte et-/-ou de numéro d'appel caractérisant les équipements terminaux appelés simultanément et, le cas échéant, l'équipement terminal appelant à chaque fois.

5. Procédé selon la revendication 3 ou 4, **caractérisé en ce que** dans plusieurs appels se recoupant simultanément, l'affichage sur le dispositif d'affichage (DL) se fait dans l'ordre d'arrivée dans le temps des appels.

6. Procédé selon l'une des revendications précédentes, **caractérisé en ce qu'**en supposant une surface de menu dans laquelle, à l'aide d'une touche de confirmation (BT), la réalisation d'une option affichée peut être provoquée et, à l'aide d'une touche « suite » (FT), l'option suivante est représentée sur le dispositif d'affichage (DL), dans l'affichage requis par un équipement terminal de communication (FE) des appels existants actuellement, il est possible de procéder à une sélection ciblée et une activation de la réception d'appel à l'aide de l'actionnement des touches citées réalisé à cet effet.

7. Procédé selon l'une des revendications précédentes, **caractérisé en ce que** l'équipement terminal externe ou inteme appelant affiché actuellement est relié directement par les procédures de réception d'appel habituelles à cet équipement terminal (FE) signalant la disposition à la réception d'appel, sans manipulation supplémentaire et sans état d'appel pour l'équipement terminal (FE) envisageant la réception d'appel.

8. Procédé selon la revendication 1 ou 6, **caractérisé en ce que** les informations propres à un abonné caractérisant les conditions de temps spécifiques et-/-ou le type des appels peuvent être enregistrées dans une liste de priorité (PL) et **en ce que** les appels en attente d'une réception d'appel peuvent être représentés dans la séquence d'évaluation placée dedans sur le dispositif d'affichage (DL).

9. Procédé selon la revendication 8, **caractérisé en ce qu'**un programme de mise en priorité est configuré de manière telle que lors de plusieurs appels à recevoir l'équipement terminal appelé à chaque fois au plus tard est présenté comme appel à interroger suivant sur le dispositif d'affichage.

10. Procédé selon la revendication 8, **caractérisé en ce que** différents équipements terminaux appelés spécifiques ou équipements terminaux appelés, qui sont associés à un groupe choisi, sont uniquement indiqués à un certain équipement terminal ou à un équipement terminal, qui est associé à un groupe d'équipements terminaux fixé d'abord, et ne peuvent être reçus à chaque fois que par celui-ci.

11. Procédé selon la revendication 8, **caractérisé en ce qu'**un programme de mise en priorité est configuré de manière telle que lors de plusieurs appels à recevoir, les appels externes sont d'abord affichés.

12. Procédé selon l'une des revendications précédentes, **caractérisé en ce que** lors de plusieurs appels affichés en s'entrecoupant dans le temps et acceptés d'abord par l'abonné par une procédure particulière, la séquence dans l'indication des appels respectifs au sens d'une position d'attente peut être déterminée de n'importe quelle façon par l'abonné envisageant une réception d'appel.

13. Procédé selon la revendication 12, **caractérisé en ce que** la séquence peut être fixée par l'actionnement répété d'une et même touche de commande correspondante qui a lieu pendant l'affichage actuel conformément au chiffre de position souhaité.

14. Procédé selon la revendication 12, **caractérisé en ce que** la séquence peut être fixée par la sélection ayant lieu pendant l'affichage actuel d'un chiffre de position, de ce fait un changement de mémoire correspondant, effectué par la commande du système, des états d'appel enregistrés se produit au sens d'une position d'attente correspondante.

15. Procédé selon la revendication 12, **caractérisé en ce que** la séquence a lieu par l'actionnement de différentes touches, associées à un chiffre de position.

16. Procédé selon l'une des revendications précédentes, **caractérisé en ce que** l'affichage des appels pouvant être reçus actuellement après entrée de l'information requérant cet affichage a lieu également en dehors de l'état de repos en termes de technique de commutation de l'équipement terminal prêt à la réception.

17. Procédé selon la revendication 16, **caractérisé en ce qu'**avec la réception d'appel respective d'un appel en attente sélectionné en conséquence, une communication existant à l'origine est mise automatiquement dans l'état d'attente.
